(19)

Europäisches Patentamt

European Patent Office

Office européen des brevets

(11) **EP 4 039 996 B1**

(12) **EUROPEAN PATENT SPECIFICATION**

(45) Date of publication and mention
of the grant of the patent:
**22.04.2026 Bulletin 2026/17**

(21) Application number: **22153815.0**

(22) Date of filing: **28.01.2022**

(51) International Patent Classification (IPC):
*F16C 23/08* (2006.01)      *F16C 35/04* (2006.01)
*F16C 19/06* (2006.01)      *F16C 19/52* (2006.01)

(52) Cooperative Patent Classification (CPC):
**F16C 23/084; F16C 35/042;** F16C 19/06;
F16C 19/522; F16C 2208/00; F16C 2220/04;
F16C 2300/40

(54) **REINFORCED CASING FOR FOOD APPLICATIONS**

VERSTÄRKTE GEHÄUSE FÜR LEBENSMITTELANWENDUNGEN

ENVELOPPE RENFORCÉE POUR DES APPLICATIONS ALIMENTAIRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.02.2021 IT 202100002192**

(43) Date of publication of application:
**10.08.2022 Bulletin 2022/32**

(73) Proprietor: **Aktiebolaget SKF**
**415 50 Göteborg (SE)**

(72) Inventors:
• **Baracca, Fausto**
**54100 Massa (MS) (IT)**
• **Nebbia Colomba, Alessio**
**56121 Pisa (IT)**
• **Bertolini, Andrea A**
**54033 Carrara (IT)**
• **Cavacece, Fabio**
**00199 Roma (IT)**

(74) Representative: **Kohl, Thomas**
**SKF GmbH**
**Gunnar-Wester-Strasse 12**
**97421 Schweinfurt (DE)**

(56) References cited:
**EP-A2- 0 487 476      FR-A1- 2 696 217
US-A1- 2018 045 248      US-A1- 2020 124 089**

## Description

Technical Sector of the Invention

The present invention relates to a reinforced casing for food applications, in particular, a casing for a rotating shaft and associated bearing unit fastened to a machine frame. More particularly, the reinforcement makes the casing resistant to higher loads, namely prolongs its working life.

Prior Art

As is known, in the F&B (Food and Beverages) industry efforts are being increasingly directed towards developing new machines and machine designs aimed at improving the safety and quality of foods.

A typical component of these applications is a casing, generally but not exclusively, made of polymeric material compatible with food applications. The casing is provided with a spherical seat which houses internally a bearing unit (in the F&B sector often called "Y-bearing units") which in turn allows the rotation of a rotating machine shaft with respect to the casing which is instead a static component fastened to the machine frame.

Generally, the design strength of the casing is equal to the admissible load acting on the bearing units: normally the catalogues of commercial bearing units show a load value Co expressed in Newtons which represents the design strength of the bearing unit.

However, it often happens that the end user of the food application does not respect the load values indicated. Moreover, it frequently happens, especially during transportation operations, that sudden loads of an intensity which cannot be easily predefined stress the casing and often result in breakage thereof.

The Applicant has already employed in another type of application the idea of reinforcing the casing with an additional element which is co-moulded together with the casing: for this reason often it is said that the casing is made of composite material. An elastic means is used as reinforcement, for example a spiral spring. However, because of the known co-moulding processes, the end product has a number of externally visible marks, i.e. pinoles or burring, where the elastic means has been inserted. Such defects are absolutely forbidden in food applications.

FR 2 696 217 A1 discloses a casing according to the preamble of claim 1.

There therefore exists the need to define a reinforced casing which offers a design solution able to overcome the aforementioned resultant drawbacks.

Summary of the Invention

In order to solve substantially the aforementioned technical problems, an object of the present invention is to define a reinforced casing for food applications, in particular a casing for a rotating shaft and associated bearing unit fastened to a machine frame. According to one aspect of the present invention, the casing is made of polymeric material and is provided with a reinforcement consisting of a ring of metallic material. Basically, in order to improve the breakage load, the rigidity and the resistance test performance with the aim of increasing the working life of the casing, the casing itself is reinforced by adding the metal ring co-moulded around the spherical seat inside which a bearing unit is housed.

With this inventive idea it is possible to improve the mechanical strength of the casing by means of the presence of this new reinforcing ring. Moreover, owing to this solution, it is possible to prevent marks being formed on the surface of the casing.

According to another aspect, the dimensions of the metal ring are based exclusively on the design of the spherical seat of the casing inside which the bearing unit is housed.

Therefore, according to the present invention a reinforced casing for food applications having the characteristic features illustrated in the independent claim, which is attached to the present description, is provided.

Further preferred and/or particularly advantageous embodiments of the invention are described in accordance with the characteristic features indicated in the attached dependent claims.

Brief Description of the Drawings

The invention will now be described with reference to the accompanying drawing which illustrates a non-limiting example of embodiment thereof, in which:

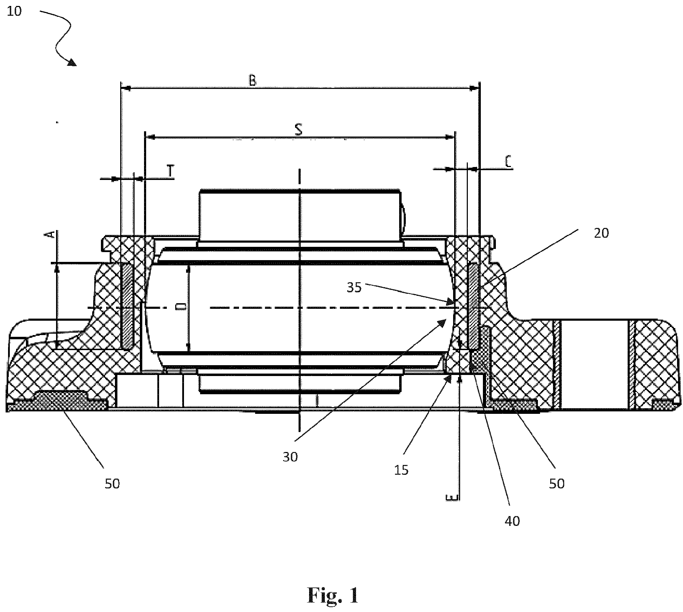

- Figure 1 is a cross-section through a reinforced casing for food applications, according to an embodiment of the present invention.

Detailed Description

Purely by way of a non-limiting example and with reference to Figure 1, the present invention will now be described: a casing 10, reinforced for food applications, is made of polymeric material and is provided with a reinforcement consisting of a metal ring 20.

The ring 20 is co-moulded (preferably the process used is injection-moulding) inside the casing 10 and is accommodated around a spherical seat 30 of the casing 10. A bearing unit, of the known type and for this reason not shown in the figure, is housed inside this spherical seat. For the purpose of food applications, the material of the ring 20 may be stainless steel or galvanized steel. Since the ring 20 surrounds the spherical seat 30, the dimensions of the ring, as will be described below (namely diameter B, thickness T and width A) are calculated using as reference the dimensions of the spherical seat 30 of the casing 10.

The technical problem to be solved when co-moulding the ring 20 inside the casing 10 is that of ensuring that the ring assumes a predetermined position inside the mould, that this position does not change once the co-moulding process has been completed and that, after removal of the stops which position the ring precisely, the surface of the casing is not altered visibly in any way.

In order to obtain these results, the steel ring 20 is positioned precisely inside the mould by means of a plurality of special pins which act as stop elements, preferably being four in number. At the end of co-moulding with the material of the casing (which may be a polypropylene, or a polyamide, but also some other polymeric material provided that it is compatible with food applications), the removal of the stop pins will obviously leave a plurality of holes 40 (for example four holes) inside the casing 10. In order to eliminate these marks, during the subsequent overmoulding operation with elastomer material, the elastomer material is made to penetrate also inside these holes. Forming the base of the casing 10 with a series of elastomer blocks 50 does not constitute a novelty in the process for manufacturing these components. In fact, the presence of the elastomer blocks 50 improves the adherence of the casing 10 when it is mounted on the machine frame. With the present invention, the presence of elastomer material is made use of in order to form, in addition to the blocks 50 along the base of the casing 10, also the filling for the holes which are left after removal of the stop pins of the ring 20. Advantageously, the elastomer material which also satisfies the function of flowing inside holes is a thermoplastic elastomer; however, different elastomer materials may also be used. With this process, therefore, the dual aim of obtaining a predetermined position of the ring 20 inside the casing 10, while at the same time not leaving any visible marks on the surface of the said casing, is achieved.

The dimensions of the ring 20 are preferably defined depending on the dimensions of the spherical seat 30 for housing the bearing unit. In particular, the dimensions of the spherical seat 30 which are of importance are its diameter S and the height of the outer ring D of the bearing unit housed in the spherical seat 30. Based on the values of these dimensions, for the ring 20 made of steel it is possible to define the main dimensions of the metal ring 20.

Firstly, in order to ensure a good structural strength, the thickness T of the ring 20 must be not less than 1 mm. Still for structural reasons, but also to ensure a good stability of the spherical seat 30, the width A of the ring 20 must not be greater than the height D of the outer ring of the bearing unit, less 1 millimetre. In other words:

$$A \leq D - 1 \text{ mm}$$

Moreover, the requirements of the injection-moulding process are such that minimum thicknesses are needed in order for the material to flow uniformly and without defects (for example swelling and bubble formation) inside the mould. Therefore the distance C of the ring 20 from a spherical surface 35 of the spherical seat 30 must not be less than 1 mm. Likewise the distance E between the ring 20 and an outer surface 15 of the casing 10 must be not less than 1 mm.

Using the dimensions thus defined, the outer diameter B of the steel ring is obtained from the following formula:

$$B = (S + 2T + 2C)$$

where S, it is pointed out again, is the diameter of the spherical seat.

This solution may be applied to all the different existing forms of casings for food applications. In particular:

- square-flange casings
- oval-flange casings
- flanged casings with three bolts
- casing with upright support
- casing with upright support and short base and further other types.

The main advantages of the invention consist in the fact that it provides a competitive advantage over the competition and that it improves the technical quality (reinforcement of the casing obtained by means of an elastic element).

From the first point of view, a novel solution for a bearing unit casing which is extremely strong and robust is obtained.

From the point of view of the internal technical quality, the invention ensures more precise positioning of the reinforcing ring, while providing better results in terms of technical performance, namely, compared to known solutions, reducing the variation in performance due to the possible movement of the elastic element during the moulding process. Moreover, from the simulations carried out, it can be concluded that, also in terms of absolute strength, the use of the metal ring compared to the known elastic element improves the overall strength of the casing. Finally, an extremely important advantage is the removal of the superficial marks which were necessary for keeping the elastic element in position. These surface marks have proved to be major bacteria traps which compromise food safety in general.

In addition to the embodiment of the invention, as described above, it must be understood that there exist numerous other variants within the scope of the appended claims.

## Claims

1. Casing (10) of a bearing unit for food applications, made of polymeric material and comprising internally a spherical seat (30) for housing the bearing unit and an internal co-moulded reinforcement made of steel, the casing (10) being **characterized in that**:

- the reinforcement is in the form of a metal ring (20) co-moulded inside the casing (10) and accommodated around the spherical seat (30) of the casing (10), and **in that** it comprises:
- a plurality of filled holes (40) created by relevant stop pins for precisely positioning the metal ring (20) inside a mould; and
- its base comprises plurality of elastomer blocks (50) whose material also fills the plurality of holes (40), from inside which the corresponding stop pins for positioning the ring (20) inside a mould for co-moulding the casing (10) are removed.

2. Casing (10) according to Claim 1, **characterized in that** the ring (20) is made of stainless steel or galvanized steel.

3. Casing (10) according to one of the preceding claims, **characterized in that** the thickness (T) of the ring (20) is not less than 1 mm.

4. Casing (10) according to one of the preceding claims, **characterized in that** the distance (C) of the ring (20) from a spherical surface (35) of the spherical seat (30) is not less than 1 mm.

5. Casing (10) according to one of the preceding claims, **characterized in that** the distance (E) of the ring (20) from an external surface (15) of the casing (10) is not less than 1 mm.

6. Casing (10) according to Claim 4, **characterized in that** the outer diameter (B) of the ring (20) is obtained from the following formula:

$$B = (S + 2T + 2C)$$

with

S: diameter of the spherical seat (30)
T: thickness of the ring (20)
C: distance of the ring (20) from a spherical surface (35) of the spherical seat (30).

**Patentansprüche**

1. Gehäuse (10) einer Lagereinheit für Lebensmittelanwendungen, das aus polymerem Material hergestellt und innen einen kugelförmigen Sitz (30) zur Aufnahme der Lagereinheit und eine innere umspritzte aus Stahl hergestellte Verstärkung umfasst, wobei das Gehäuse (10) **dadurch gekennzeichnet ist, dass**:

- die Verstärkung in Form eines Metallrings (20) vorliegt, der im Inneren des Gehäuses (10) umspritzt und um den kugelförmigen Sitz (30) des Gehäuses (10) herum aufgenommen ist, und dadurch, dass es Folgendes umfasst:
- eine Vielzahl von gefüllten Löchern (40), die durch entsprechende Anschlagstifte zum präzisen Positionieren des Metallrings (20) in einer Form erzeugt worden sind, und
- seine Basis eine Vielzahl von Elastomerblöcken (50) umfasst, deren Material auch die Vielzahl von Löchern (40) ausfüllt, woraus die entsprechenden Anschlagstifte zur Positionierung des Rings (20) in einer Form zum Umspritzen des Gehäuses (10) entfernt werden.

2. Gehäuse (10) nach Anspruch 1, **dadurch gekennzeichnet, dass** der Ring (20) aus Edelstahl oder verzinktem Stahl hergestellt ist.

3. Gehäuse (10) nach einem der vorhergehenden Ansprüche, **dadurch gekennzeichnet, dass** die Dicke (T) des Rings (20) mindestens 1 mm beträgt.

4. Gehäuse (10) nach einem der vorhergehenden Ansprüche, **dadurch gekennzeichnet, dass** der Abstand (C) des Rings (20) von einer kugelförmigen Fläche (35) des kugelförmigen Sitzes (30) mindestens 1 mm beträgt.

5. Gehäuse (10) nach einem der vorhergehenden Ansprüche, **dadurch gekennzeichnet, dass** der Abstand (E) des Rings (20) von einer Außenfläche (15) des Gehäuses (10) mindestens 1 mm beträgt.

6. Gehäuse (10) nach Anspruch 4, **dadurch gekennzeichnet, dass** sich der Außendurchmesser (B) des Rings (20) aus der folgenden Formel ergibt:

$$B = (S + 2T + 2C)$$

wobei

S: Durchmesser des kugelförmigen Sitzes (30)
T: Dicke des Rings (20)
C: Abstand des Rings (20) von einer kugelförmigen Fläche (35) des kugelförmigen Sitzes (30).

**Revendications**

1. Carter (10) de palier pour applications alimentaires, réalisé en matériau polymère et comprenant intérieurement un siège sphérique (30) destiné à recevoir le palier et un élément de renforcement interne co-moulé, réalisé en acier, le carter (10) étant **caractérisé en ce que** :

- l'élément de renforcement se présente sous la forme d'un anneau métallique (20) co-moulé à l'intérieur du carter (10) et adapté autour du siège sphérique (30) du carter (10), et **en ce qu'**il comprend :
- une pluralité de trous remplis (40) formés par des goupilles d'arrêt correspondantes pour le positionnement précis de l'anneau métallique (20) à l'intérieur d'un moule ; et
- sa base comprend une pluralité de blocs (50) en élastomère dont la matière remplit également la pluralité de trous (40), desquels sont retirées les goupilles d'arrêt correspondantes pour le positionnement de l'anneau (20) à l'intérieur d'un moule pour le co-moulage du carter (10).

2. Carter (10) selon la revendication 1, **caractérisé en ce que** l'anneau (20) est réalisé en acier inoxydable ou en acier galvanisé.

3. Carter (10) selon l'une des revendications précédentes, **caractérisé en ce que** l'épaisseur (T) de l'anneau (20) n'est pas inférieure à 1 mm.

4. Carter (10) selon l'une des revendications précédentes, **caractérisé en ce que** la distance (C) de l'anneau (20) par rapport à une surface sphérique (35) du siège sphérique (30) n'est pas inférieure à 1 mm.

5. Carter (10) selon l'une des revendications précédentes, **caractérisé en ce que** la distance (E) de l'anneau (20) par rapport à une surface externe (15) du carter (10) n'est pas inférieure à 1 mm.

6. Carter (10) selon la revendication 4, **caractérisé en ce que** le diamètre extérieur (B) de l'anneau (20) est obtenu par la formule suivante :

$$B = (S + 2T + 2C)$$

où

S : diamètre du siège sphérique (30)
T : épaisseur de l'anneau (20)
C : distance de l'anneau (20) par rapport à une surface sphérique (35) du siège sphérique (30).

Fig. 1

**EP 4 039 996 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2696217 A1